Europäisches Patentamt

European Patent Office

Office européen des brevets

(19)

(11) Publication number: **0 412 069 A1**

## EUROPEAN PATENT APPLICATION

(12)

(21) Application number: 90830360.5

(22) Date of filing: 31.07.90

(51) Int. Cl.5: **F16H  47/06,** F16H 3/08, F16H 37/04

(30) Priority: 01.08.89 IT 6765789

(43) Date of publication of application:
06.02.91 Bulletin  91/06

(84) Designated Contracting States:
AT DE ES FR GB IT NL SE

(71) Applicant: IVECO FIAT S.p.A.
Via Puglia 35
I-10156 Torino(IT)

(72) Inventor: **Norzi, Alberto**
**Via San Pio Quinto 30bis**
**I-10125 Torino(IT)**
Inventor: **Lupo, Giorgio**
**Via Domodossola 6**
**I-10040 Rivalta (Torino)(IT)**

(74) Representative: **Buzzi, Franco et al**
**c/o Jacobacci-Casetta & Perani S.p.A. Via**
**Alfieri, 17 17**
**I-10121 Torino(IT)**

(54) **A hydromechanical power-shift transmission for motor vehicles, particularly for commercial vehicles.**

(57) A hydromechanical power-shift transmission for motor vehicles comprises a torque converter (5) used for pulling away from stationary, a synchronised gearbox (33) with six gears plus reverse, a high-low gear-range doubler (47) which enables ten gears plus reverse to be provided at the output ot the transmission, a pair of multi-disc friction clutches (54,55) which effect the power-shift gear-changing, and hydraulic control members. A hydrodynamic decelarator (80) is also provided, and is usable with the second to the tenth gear ratios whilst the converter is used for the first gear ratio and for reverse.

FIG. 1

EP 0 412 069 A1

Xerox Copy Centre

# A HYDROMECHANICAL POWER-SHIFT TRANSMISSION FOR MOTOR VEHICLES, PARTICULARLY FOR COMMERCIAL VEHICLES

The present invention relates in general to motor-vehicle transmissions, particularly for commercial vehicles.

More particularly, the invention relates to a hydromechanical power-shift transmission comprising a drive shaft, a hydraulic torque converter including a pump coupled for rotation with the drive shaft and a turbine, an output shaft coaxial with the input shaft, a gearbox with permanently-meshed gears for transmitting drive from the drive shaft to the output shaft and power-shift means for effecting a change from one gear ratio to another without interrupting the transmission of torque from the drive shaft to the output shaft.

A transmission of this type is generally known from EP-A-88 188.

The object of the present invention is to provide a transmission of the type defined above which has an extremely compact configuration and good performance as well as being very safe in operation.

The transmission according to the invention is characterised in that it comprises:
- a first input shaft coupled for rotation with the turbine of the torque converter and carrying a drive gear for the first gear ratio and reverse gear,
- a second, tubular input shaft coupled for rotation with the pump of the torque converter and carrying a set of drive gears,
- first and second lay shafts arrranged on opposite sides of the input shafts and on which driven gears for the odd gear ratios, for the even gear ratios and for the reverse gear respectively are rotatable, the driven gear for the first gear ratio and the driven gear for the reverse gear being meshed directly and indirectly respectively with the drive gear on the first input shaft and the other driven gears for the even and the odd gear ratios being meshed with the drive gears on the second input shaft,
- sleeve coupling means for selectively making the driven gears fast with their respective lay shafts,
- a gear-range doubler including first and second input gears rotatable on the first and second lay shafts respectively, first and second auxiliary idle shafts arranged on opposite sides of the output shaft coaxial with the first and second lay shafts and carrying third and fourth input gears, first and second output gears coupled for rotation with the output shaft and meshed respectively with the first and second and with the third and fourth input gears, the transmission ratios between the first and second input gears and the first output gear being different from the transmission ratios between the third and fourth input gears and the second output gear,
- first and second clutch units, between the first and second lay shafts and the first and second auxiliary shafts respectively, including respective hydraulic friction clutches with cross-over engagement/disengagement, the two clutch units being operable to connect the first or second input gear and the third or fourth input gear for rotation with the first and second lay shafts respectively and to disconnect them therefrom, and
- hydraulic means for the preselective, sequential control of the sleeve coupling means and of the two clutch units.

In a preferred embodiment of the invention, the gearbox has six ratios and a reverse gear and the gear-range doubler enables the transmission to provide ten ratios plus reverse.

Each of the first and second clutch units conveniently comprises:
- a multi-disc friction clutch in an oil bath with an hydraulic feed, including an input member coupled for rotation with its lay shaft, an output member, a set of friction discs which can be coupled for rotation either with the input member or with the output member and a hydraulic piston movable in the input member to make the latter fast with the output member by pressing the friction discs together,
- a first connection member fixed to the first or second input gear of the respective lay shaft,
- a second connection member fixed to the respective auxiliary shaft, and
- a hydraulically-controlled clutch for selectively coupling the output member of the hydraulic friction clutch for rotation with the first or second connection member before the engagement of the respective hydraulic friction clutch.

According to another characteristic of the invention, the transmission further includes a hydrodynamic decelerator operatively associated with the second input shaft.

The advantages of the transmission according to the invention over known transmissions may be summarised as follows:
- extreme compactness with good performance since the torque converter is used only for pulling away in first gear and in reverse whilst the other gear ratios are achieved purely mechanically,

- gear changes are achieved without interruption of the drive (power-shift),

- very safe operation since, as the gear changes are preselective, should a preselected gear fail to be engaged, the exchange of torque between the hydraulic friction clutches of the two lay shafts is not enabled so that, in this eventuality, the previously-engaged gear is retained and an interruption of the drive (or of engine braking during descents) can never happen; this represents a considerable improvement in safety compared with discrete gearboxes which require the friction clutch and the gear previously engaged to be disengaged before the required gear can be engaged, which involves the interruption of the transmission and the risk of the gear box remaining in neutral if, for some reason, the required gear cannot be engaged,

- good mechanical performance,

- good braking action, even at very low speeds (on steep descents) thanks to the decelerator incorporated which acts in all gear ratios from the second to the tenth,

- particularly small dimensions, no greater than those of conventional mechanical gearboxes, despite the inclusion of the torque converter and decelerator,

- overall weight and cost less than those of conventional gearboxes to which a decelerator and a servo control system for the gears and the clutch have been added,

- gearbox operation arranged for semiautomatic or automatic operation through an electronic control unit,

- the ability of the vehicle to advance at very low speed (for example when travelling in a queue) which is made possible by the limited sliding of the torque converter under these conditions, without the overheating problems typical of conventional transmissions with dry clutches.

The invention will now be described in detail with reference to the appended drawings, provided purely by way of non-limiting example, in which:

Figure 1 is a schematic longitudinal section of a hydro-mechanical transmission according to the invention,

Figure 2 shows a detail of the transmission on an enlarged scale.

In brief, the transmission comprises a mechanical gearbox with ten gear ratios plus reverse obtained by means of six basic ratios (plus reverse) and a high-low gear-range doubler. With a view to improving the driving comfort of the vehicle in which the transmission is installed as well as its pulling away from stationary and its ability to travel slowly in queues the first gear ratio and the reverse gear are coupled to a torque converter with a low multiplication ratio ( $\tau \simeq 1.65$ ). The remaining gears, relating to the other nine ratios, are coupled mechanically to the vehicle engine by means of a flexible coupling. The structural layout provides two lay shafts which carry the gears for the even gear ratios and the odd gear ratios respectively. A gear ratio can be preselected on one lay shaft whilst another gear ratio is in operation on the other lay shaft since only the hydraulic clutch of the driving shaft is engaged. When the new gear ratio has been engaged the drive may be switched to the latter by the cross-over disengagement/engagement of the two hydraulic clutches so that the gear is changed without interruption of the drive. Should the preselected gear ratio not be engaged (due to damage of the system), consent is not given for the exchange of drive between the two hydraulic clutches so that the previous gear ratio remains in operation without interruption to the drive (or to engine braking during descents). The decelerator is usable from the second to the tenth gear ratios.

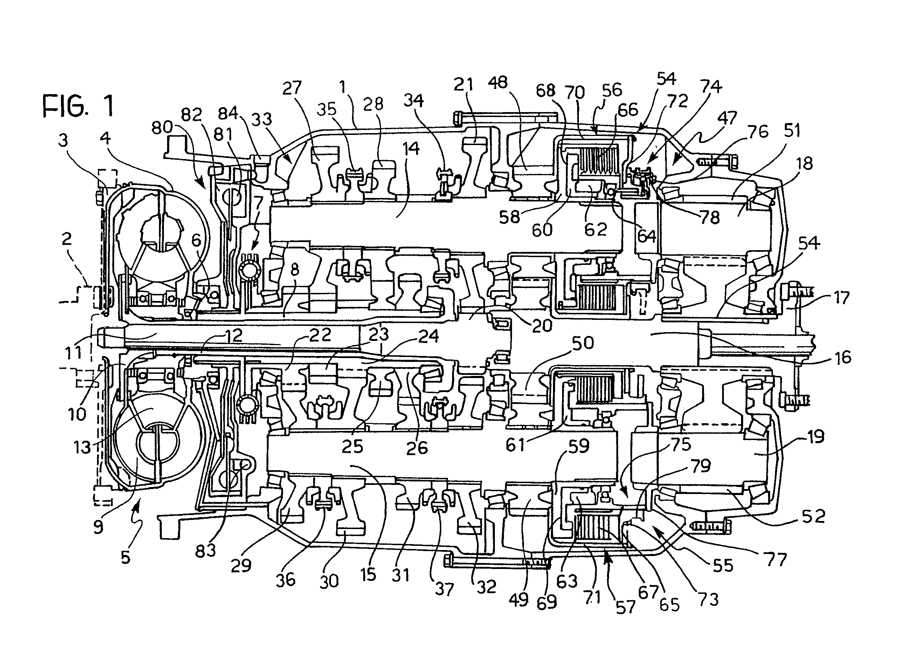

In detail, with reference to Figure 1, the transmission comprises a housing 1 with "dry sump" lubrication adapted to be fitted at the output of the shaft 2 of an internal combustion engine of a motor vehicle, normally a commercial vehicle or other self-propelled vehicle. The end of the drive shaft 2 carries a resilient entrainment plate 3 to which is fixed the body 4 or pump of a conventional hydraulic torque converter 5. The opposite end of the body 4 of the converter 5 from the drive shaft 2 is coupled to the hub 6 of a flexible coupling 7 coupled for rotation with a tubular input shaft 8.

The turbine of the converter 5, indicated 9, is rotatably coupled by means of a hub 10 to one end of an input shaft 11 which extends coaxially and rotatably through the input shaft 8. A tubular support 12 is interposed between the input shafts 8 and 11 and is fixed to the housing 1, a reaction member 13 of the torque converter 5 being mounted on the tubular support in a manner known to an expert in the art.

Two lay shafts, indicated 14 and 15 extend parallel to the input shafts 8 and 11 and are located on opposite sides both of the input shafts 8 and 11 and of the inner end of an output shaft 16 arranged as a coaxial extension of the input shaft 11. The outer end of the output shaft 16 is torsionally coupled, in the manner made clear below, to an output flange 17 for connection to a transmission shaft in known manner.

Two auxiliary shafts, indicated 18, 19, are arranged coaxially as extensions of the lay shafts 14 and 15 respectively and are thus situated on opposite sides of the outer end of the output shaft 16.

The inner end of the input shaft 11 projects beyond the corresponding ends of the tubular input shaft 8 and of the tubular support 12 and forms a drive gear 20 for the first ratio. The gear 20 is meshed directly with a first - ratio, driven gear 21 mounted for rotation on the lay shaft 14 and, on the opposite side is meshed indirectly with a reverse gear 32 mounted for rotation on the lay shaft 15. The gear 20 is meshed indirectly with the gear 32 in conventional manner by means of an idle reverse gear not show in the drawing.

The input shaft 8 carries five drive gears 22, 23, 24, 25, 26, fixed for rotation therewith, whilst two further, driven gears 27, 28 and three further, driven gears 29, 30 and 31 are mounted for rotation on the lay shaft 14 and on the lay shaft 15 respectively.

The drive gears 20, 22-26 define, with the driven gears 21 and 27-32, a mechanical gearbox 33 with six forward gears plus reverse with hydraulically-controlled synchronised clutches described in detail below. As will be seen, the transmission enables the provision of a total of ten forward gear ratios plus reverse at its output, that is, in correspondence with the flange 17. The driven gears 27 and 28 of the lay shaft 14 correspond to the odd gear ratios whilst the driven gears 29, 30 and 31 correspond to the even ratios of the gearbox 33. In detail, the drive gear 22 meshes with the driven gear 29 to achieve the fourth and eighth gear ratios; the drive gear 23 meshes with the driven gear 27 to achieve the third and seventh gear ratios; the drive gear 24 meshes with the driven gear 30 to achieve the second and sixth gear ratios; the drive gear 25 meshes with the driven gear 28 to achieve the fifth and ninth gear ratios; the drive gear 26 meshes with the driven gear 21 to achieve the tenth gear ratio.

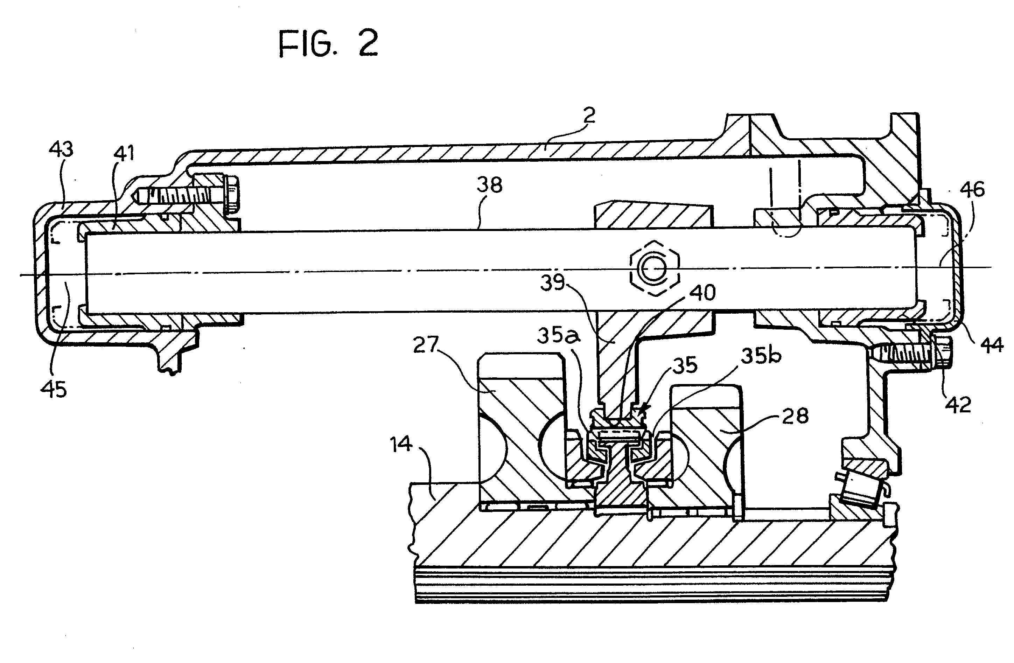

In order selectively to couple the driven gears 21, 27 and 28 for rotation with the lay shaft 14, and the driven gears 29, 30, 31 and 32 for rotation with the lay shaft 15, respective hydraulically-controlled, synchronised coupling sleeves 34, 35 and 36, 37 are provided for cooperating with respective dog clutches, in known manner. Figure 2 shows a detail of the hydraulic control for the sleeve 35 which cooperates with the dog clutches, generally indicated 35a and 35b. The general configuration of this control, which corresponds to that used for controlling the other coupling sleeves, may be of the type described and illustrated in Italian Patent Application No. 67946-A/88 in the name of the same Applicant. It comprises a rod 38 slidable parallel to the lay shaft 14 and carrying a transverse forked element 38 engaged in a groove 40 in the sleeve 35 to cause it to slide axially in opposite directions, corresponding to the engagement of one or other of the dog clutches 35a, 35b. The ends of the rod 38 are formed with two pistons 41, 42 slidable in respective cylinders 43, 44 formed in the body 2 and defining therewith respective thrust chambers 45, 46. The two chambers 45 and 46 are connected to an electronically-controlled electro-hydraulic servo-control circuit, also of the type described and illustrated in the aforementioned Italian Patent Application No. 67946-A/88. In the condition shown in Figure 2, both the chambers 45 and 46 are supplied with pressurised hydraulic fluid and the rod 38 is kept in a central position which corresponds to the idle position of the coupling sleeve 35. When there is pressure in only one or other of the two chambers 45 and 46, the rod 38 moves into one or other of the positions shown in broken outline in the drawing, which corresponds to the sliding of the sleeve 35 to the left or to the right, and hence to the engagement of one or other of the dog clutches 35a, 35b, with the corresponding coupling of one or other of the two driven gears 27, 28 for rotation with the lay shaft 14.

In order for ten gear ratios to be available in output at the flange 17 of the gearbox 33, a gear-range-doubler, generally indicated 47, is provided. The doubler 47 comprises first and second input gears 48, 49 rotatably mounted near the inner ends of the lay shafts 14, 15 and meshed with a first output gear 50 fixed for rotation with the inner end of the output shaft 16, and third and fourth input gears 51, 52 coupled for rotation with the auxiliary shafts 18 and 19 respectively and meshed with a second output gear 53 coupled for rotation near the outer end of the output shaft 16. The same output gear 53 achieves the torsional coupling between the shaft 16 and the output flange 17 by means of an internal toothed coupling generally indicated 54.

The transmission ratios between the gears 48-49 and 50 are equal to each order and different from the transmission ratios between the gears 51-52 and 53 (which are also equal to each other). These ratios are arranged, in the manner clarified below, to provide, a higher gear range and a lower gear range respectively. By way of example, the transmission ratio in the higher range (gears 48-49, 50) may be 1.038 and that in the lower range (gears 51-52, 53) may be 2.84. The higher range provides the sixth to the tenth gear ratios whilst the lower range provides the reverse gear and the first to the fifth ratios.

Two clutch units between the lay shaft 14 and the auxiliary shaft 18 and between the lay shaft 15 and the auxiliary shaft 19 respectively are indicated 54 and 55. The clutch unit 54 is operable selectively to connect or disconnect the first input gear 48 or the second input gear 51 to or from the lay shaft 14 whilst the clutch unit 55 enables the second input gear 49 or the fourth input gear 52 to be coupled selectively for rotation with the lay shaft 15.

In detail, the two clutch units 54, 55 each comprise a respective hydraulic friction clutch 56, 57 including an input member 58, 59, coupled for rotation with the respective lay shaft 14, 15 and defining a cylinder in which a piston 60, 61 is slidable against a thrust spring 62, 63, and an output member constituted by a toothed sleeve 64, 65 coaxial with the input member 58, 59.

Two sets of friction discs 66, 67 are operatively associated with the input and output members 58, 64 and 59, 65, the discs of each set being coupled alternately for rotation with the input member 58 or 59 and with the output sleeve 64 or 65 respectively. In the configuration shown in the drawing, the springs 62, 63 keep the pistons 60 and 61 in retracted positions which correspond to the disengagement of the friction clutches 56 and 57. The supply of oil under pressure (by means of ducts not shown in the drawing) to the chambers defined between the cylinders 58 and 59 and the pistons 60 and 61, indicated 68, 69 respectively, causes the pistons 60 and 61 to advance against the action of the respective springs 62 and 63 so as to press the friction discs 66 and 67 respectively together and thus make the input members 58 and 59 fast for rotation with the respective output members 64, 65.

The chambers 68 and 69 are supplied and discharged in a cross-over manner so that, when one of the friction clutches 56, 57 is gradually engaged, the other friction clutch 57, 56 is gradually disengaged and vice versa. This function is achieved in a manner well known to experts in the field of hydraulic (power-shift) friction clutches.

Two first annular connection members, indicated 70 and 71 are rotatable coaxially outside the respective cylinders 58, 59 and are coupled respectively for rotation with the first input gear 48 of the lay shaft 14 and with the second input gear 49 of the lay shaft 15. The input members 70 and 71 have respective sets of teeth 72, 73 which form part of respective hydraulically-operated dog clutches 74, 75 of the two clutch units 54, 55. The clutches 74, 75 include two second toothed connection members 76, 77 fixed for rotation with the auxiliary shafts 18, 19 respectively and two slidable toothed coupling sleeves 78, 79. The sleeves may be of the quick-fit type, as shown with reference to the sleeve 79, or of the synchronised type as shown for the sleeve 78.

According to another variant, not shown, the two couplings 74 and 75 could be replaced by a pair of hydraulic friction clutches similar to the clutches 56, 57.

The two sleeves 78 and 79 are also operated by hydraulic servo controls similar to those described above with reference to the coupling sleeves 34, 37. They enable the output members 64, 65 of the two hydraulic friction clutches 56, 57 to be coupled selectively to their the first connection members 70, 71 or to their second connection members 76 and 77. In the first case, the lay shaft 14 or the lay shaft 15 is coupled for rotation with the respective first or second input gear 48 or 49 to achieve an output ratio in the higher range which, as stated, enables the engagement of the sixth to the tenth gears. In the second case the lay shaft 14 or the lay shaft 15 is coupled for rotation with the respective auxiliary shaft 18, 19, or the third and fourth input gears 51, 52 respectively. This achieves an output ratio in the lower range which, as stated, enables the engagement of reverse gear and the first to fifth gears.

In generally conventional manner the hydraulic servo-control circuit for the coupling sleeves 34-37 and for the two clutch units 54, 55 includes electrically operated valves piloted in a preselective, sequential manner by means of an electronic control unit. In other words, when any one of the gear ratios is engaged manually, the control sequence provides initially for the operation of the sleeve 34-37 corresponding to the ratio selected and then enables the clutch units 54 and 55 to be activated, with the exchange of torque between the two friction clutches 56 and 57. Thus, in the event of failure to engage the required gear, the exchange of torque between the friction clutches 56 and 57 is prevented, and the transmission can never remain in neutral since, in this eventuality, the previously engaged gear is retained.

The cross-over engagement/disengagement of the two friction clutches 56, 57 is also achieved in known manner by means of electronically-controlled pressure-modulator valves piloted by the same electronic unit as that associated with the hydraulic servo-controls for the coupling sleeves 34-37 and 78, 79.

The transmission according to the invention further includes a hydrodynamic decelerator 80 operatively associated with the input shaft 8. This decelerator 80 comprises a stator 81 fixed to the housing 1 and a bladed rotor 82 coupled for rotation with the input shaft 8 by means of the flexible coupling 7. The stator 81 has an inlet hole 83 for admitting pressurised oil and an outlet hole 84 for its discharge.

With the assembly described above, the decelerator 80 can be activated for all the gear ratios provided by the drive gears 22-26 of the output shaft 8 but it cannot be activated for the first gear ratio or for the reverse gear, which are provided by the drive gear 20 of the input shaft 11 which, as stated, is driven by the torque converter 5.

As stated above, the lubrication of the transmission is achieved with a dry sump so as to reduce the power losses which would occur as a result of the "whipping" of the lubricating oil if the various gears were immersed in oil as in gearboxes in current use.

The transmission has several accessories such as the lubrication pump, the oil-circulation pump for the torque converter 5 and for the hydrodynamic decelerator 80, and the pumps for pressurising the accumulator of the decelerator 80, and the hydraulic servo control circuits for the coupling sleeves 34-37, 78 and 79 as well as for operating the hydraulic friction clutches 56 and 57. These pumps, which are not shown in the drawings, are driven by any one of the drive gears 22-26 of the input shaft 8 which, as stated, is rotated directly by the drive shaft 2.

The operation of the transmission according to the invention will now be described below.

As explained above, the transmission provides ten output gear ratios obtained by means of the gearbox 33, with six basic ratios, and the gear-range doubler 47, plus reverse. The first gear ratio and the reverse gear are coupled to the torque converter 5 which has a low multiplication ratio, of the order of 1.65. The other nine gears are coupled directly to the drive shaft 2 by means of the flexible coupling 7 and the lay shafts 14 and 15. A gear can be preselected on a lay shaft 14, 15 whilst another gear is in operation on the lay shaft 15, 14 respectively since only the friction clutch 56 or 57 of the lay shaft 14 or 15 which is in drive is engaged. When the new gear selected has been engaged, consent is given for the drive to be switched by means of the cross-over engagement/disengagement of the two friction clutches 56, 57. The gear is thus changed without interruption of the drive.

In the event of failure to engage to the preselected gear, consent is not given for the exchange of drive between the two clutches 56, 57 so that the previous gear remains in operation without interruption of the drive (or of the engine braking during descents).

In detail, when the coupling sleeves 34-37 and 78, 79 are in their central positions shown in Figure 1 and the friction clutches 56, 57 are both disengaged, the transmission is in neutral.

In order to pull away, either forwards or in reverse, it is necessary for the first gear or reverse to be engaged by movement of the sleeve 34 for first gear or the sleeve 37 for reverse respectively, to the right with reference to Figure 1.

The driven gear 21 for the first ratio is thus made fast with the lay shaft 14 or the driven gear 32 for reverse is made fast with the lay shaft 15 by means or its idle gear.

Once the first gear has been engaged, the vehicle to which the transmission is fitted can be made to pull away by the displacement of the sleeve 78 of the clutch unit 54 associated with the lay shaft 14 to the right to achieve the output ratio in the lower range and the non-gradual engagement of the friction clutch 56.

The turbine 9 of the torque converter 5 is thus connected to the output flange 17 by means of the input shaft 11, the gears 20 and 21, the lay shaft 14, the friction clutch 56, the dog clutch 64-78-76, the auxiliary shaft 18 and the low-range gears 51 and 53.

When the engine is accelerated, the converter 5 will gradually make the vehicle pull away by adding its torque multiplication ratio to that of the gears.

Once the vehicle is under way, the driver can, if he wishes, change to another gear ratio as follows:

1 - Changing from first gear to reverse with the vehicle stationary or at very low speed

This is achieved by the movement of the sleeve 37 to the right in order to preselect the coupling of the driven gear 32 for reverse to the lay shaft 15 and displacement of the sleeve 79 to the right to engage the lower range. As a result of the consent generated by this engagement, the friction clutch 56 is gradually disengaged and, simultaneously, the friction clutch 57 is gradually engaged so that the drive is switched from the first ratio gradually, without interruption of the torque transmission.

2 - Changing from first gear to second gear

This change is achieved by preselection of the engagement of the driven gear 30 on the lay shaft 15 by movement of the sleeve 36 to the right, the sleeve 79 also being moved to the right to achieve transmission in the lower range.

It should be noted that the sleeves 78 and 79 will always remain towards the right (that is so that their lay shafts 14, 15 are coupled to the input gears 51, 52 of the respective auxiliary shafts 18, 19) for all gears between the first and the fifth as well as, as stated, for reverse.

At this point the friction clutch 56 is gradually disengaged and, simultaneously, the friction clutch 57 is gradually engaged so that the drive is switched from first gear to second gear gradually, without interruption of the power.

Subsequent changes up to fifth gear take place in the same way, with the preselection of the desired gear by means of the sleeves 35, 36, and 35 again, respectively and the alternate change-over of the engagement/disengagement of the friction clutches 56, 57.

6

EP 0 412 069 A1

3 - Changing from fifth gear to the sixth and subsequent gears

These changes take place in an entirely similar manner to those described above after the sleeves 78 and 79 have been moved to the left to preselect the higher-range of output ratios and the desired gear has then been engaged by means of the sleeves 35, 36 and 37.

All the reverse changes (downwards) take place in the same way, care being taken to move the sleeves 78 and 79 to the right for the fifth to the first or reverse gears to be engaged.

From the above description, it is clear that the characteristic of the transmission according to the invention is that it enables changes between gear ratios to be achieved alternately between one lay shaft 14, 15 and the other.

Jumps of only one gear (for example first - second) or of three gears (for example: first - fourth) are therefore possible.

Jumps of two gears (for example first - third or second - fourth) are impossible, however, since the relative gears (the even gears and the odd gears respectively) are situated on the same lay shaft 14 and 15 respectively.

4 - Use of the decelerator (possible in second to tenth gears)

The deceleration 80 is normally kept inoperative by the opening of the discharge hole 84 so that the bladed rotor 82 can rotate freely without offering any resistance (except the ventilating effect).

In order to activate the braking, the outlet 84 is closed by suitable conventional valves whilst the supply duct 83, which communicates in conventional manner with an hydraulic pressurised-oil accumulator, is opened.

The toroidal region between the facing blades of the rotor 82 and of the stator 84 is rapidly filled with oil so that a strong braking action is generated by the hydrodynamic action between the blades and the oil.

The braking effect causes considerable heat to be developed but this is removed by the oil circulating between the inlet 83 and the discharge aperture 84.

The oil emerging from the discharge aperture 84 is passed (by means of a pump not shown) through a heat-exchanger which cools it before it is readmitted to the inlet 83.

The following table summarises, by way of example, the gear ratios which can be achieved in the various gears by the transmission according to the invention.

| GEARS | ACTUAL $\tau$ | RELATIVE $\tau$ |
|---|---|---|
| 1st CONV. 1.65 x 2.92 x 2.84 | 13.68 | 15.72 |
| CONV. 1 x 2.92 x 2.84 | 8.29 | 9.52 |
| 2nd 2.292 x 2.84 | 6.51 | 7.48 |
| 3rd 1.789 x 2.84 | 5.08 | 5.84 |
| 4th 1.39 x 2.84 | 3.94 | 4.52 |
| 5th 1.08 x 2.84 | 3.0 | 3.51 |
| 6th 2.292 x 1.038 | 2.38 | 2.73 |
| 7th 1.789 x 1.038 | 1.85 | 2.13 |
| 8th 1.39 x 1.038 | 1.44 | 1.65 |
| 9th 1.08 x 1.038 | 1.12 | 1.28 |
| 10th 0.838 x 1.038 | 0.87 | 1 |
| RM CONV. 1.65 x 2.6 x 2.84 | 12.18 | 14 |

**Claims**

1. A hydromechanical power-shift transmission particularly for commercial vehicles comprising a drive shaft, a hydraulic torque converter including a pump coupled for rotation with the drive shaft and a turbine, an output shaft coaxial with the input shaft, a gearbox with permanently-meshed gears for transmitting drive from the drive shaft to the output shaft, and power-shift means for effecting a change from one gear ratio to another without interrupting the transmission of torque from the drive shaft to the output shaft,

7

EP 0 412 069 A1

characterised in that it includes:

- a first input shaft (11) coupled for rotation with the turbine (9) of the torque converter (5) and carrying a drive gear (20) for the first gear ratio and reverse gear,
- a second, tubular input shaft (8) coupled for rotation with the pump (4) of the torque converter (5) and carrying a set of drive gears (22-26),
- first and second lay shafts (14, 15), arranged on opposite sides of the input shafts (8, 11) and on which driven gears for the odd gear ratios (21, 27, 28) for the even gear ratios and for reverse gear (29-32) respectively are rotatable, the driven gear (21) for the first gear ratio and the driven gear (32) for the reverse gear being meshed directly and indirectly respectively with the drive gear (20) on the first input shaft (11) and the other driven gears (27-21) for the even and the odd gear ratios being meshed with the drive gears (22-26) on the second input shaft (8),
- sleeve coupling means (34-37) for selectively making the driven gears (21, 27-32) fast with their respective lay shafts (14, 15),
- a gear-ratio range doubler (47) including first and second input gears (48, 49) rotatable on the first and second lay shafts (14, 15) respectively first and second auxiliary idle shafts (18, 19) arranged on opposite sides of the output shaft (16) coaxial with the first and second lay shafts (14, 15) and carrying third and fourth input gears (51, 52), first and second output gears (50, 53) coupled for rotation with the output shaft (16) and meshed respectively with the first and second input gears (48, 49) and with the third and fourth input gears (51, 52); the transmission ratios between the first and second input gears (48, 49) and the first output gear (50) being different from the transmission ratios between the third and fourth input gears (51, 52) and the second output gear (53),
- first and second clutch units (54, 55), between the first and second lay shafts (14, 15) and the first and second auxiliary shafts (18, 19) respectively, including respective hydraulic friction clutches (56, 57) with cross-over engagement/disengagement, the two clutch units (54, 55) being operable to connect the first or second input gear (48, 49) and the third or fourth input gear (51, 52) for rotation with the first and second lay shafts (14, 15) respectively, and to disconnect them therefrom, and
- hydraulic means for the preselective sequential control of the sleeve coupling means (34-37) and of the two clutch units (54, 55).

2. A transmission according to Claim 1, characterised in that the gearbox (33) has six ratios plus reverse and the gear-range doubler (47) operates to makes the transmission operative with ten ratios plus reverse.

3. A transmission according to Claim 2, characterised in that, in addition to the driven gear (21) for the first ratio, there are two driven gears on the first lay shaft (14), a gear (27) for the third and seventh ratios and a gear (28) for the fifth and ninth ratios respectively and, in addition to the reverse driven gear (32), there are three driven gears on the second lay shaft (15), a gear (29) for the fourth and eighth ratios, a gear (30) for the second and sixth ratios and a gear (31) for the tenth ratio respectively.

4. A transmission according to Claim 1, characterised in that each of the first and second clutch units (54, 55) comprises:

- an hydraulic friction clutch (56, 57) including an input member (58, 59) coupled for rotation with the respective lay shaft (14, 15), an output member (64, 65), a set of friction discs (66, 67) coupled alternately for rotation with the input member (58, 59) and the output member (64, 65) and a hydraulic piston (60, 61) movable in the input member (58, 59) to make the latter fast with the output member (64, 65) by the pressing together of the friction discs (66, 67),
- a first connection member (70, 71) fixed to the first or the second input gear (48, 49) of the respective lay shaft (14, 15),
- a second connection member (76, 77) fixed to the respective auxiliary shaft (18, 19), and
- an hydraulically-controlled clutch (74, 75) for selectively coupling the output member (64, 65) of the hydraulic friction clutch (56, 57) for rotation with the first or second connection member (70, 76; 71, 77) before the engagement of the respective hydraulic friction clutch (56, 57).

5. A transmission according to Claim 4, characterised in that the hydraulically-controlled clutches (74, 75) are hydraulic friction clutches similar to the said hydraulic friction clutches (56, 57).

6. A transmission according to any one of the preceding claims, characterised in that it further includes a hydrodynamic decelerator (80) operatively associated with the second input shaft (8).

8

FIG. 1

FIG. 2

EP 0 412 069 A1

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 110 538 (EATON CORPORATION) <br> * pages 5 - 8; figure 1 * <br> - - - | 1,2,4 | F 16 H 47/06 <br> F 16 H 3/08 <br> F 16 H 37/04 |
| A | EP-A-0 088 184 (EATON CORPORATION) <br> * abstract * <br> - - - | 1,2,4 | |
| A | EP-A-0 040 864 (EATON CORPORATION) <br> * abstract * <br> - - - | 1,2,4 | |
| A | EP-A-0 004 045 (EATON CORPORATION) <br> * abstract * <br> - - - | 1,2,4 | |
| A | US-A-4 375 171 (EATON CORPORATION) <br> * abstract * <br> - - - | 1,2,4 | |
| D,A | EP-A-0 088 188 (EATON CORPORATION) <br> * abstract * <br> - - - - - | 1,2,4 | |

| TECHNICAL FIELDS SEARCHED (Int. Cl.5) |
|---|
| F 16 H |

The present search report has been drawn up for all claims

| Place of search | Date of completion of search | Examiner |
|---|---|---|
| The Hague | 02 November 90 | FLORES E. |